# EUROPÄISCHE PATENTSCHRIFT

(11) **EP 1 165 972 B1**
(45) Veröffentlichungstag und Bekanntmachung des Hinweises auf die Patenterteilung: **30.10.2002**
(21) Anmeldenummer: 00922519.4
(22) Anmeldetag: 15.03.2000
(51) Int. Cl.: F16B 25/10

(54) **SELBSTBOHRENDES UND GEWINDEFORMENDES VERBINDUNGSELEMENT**
SELF-DRILLING AND THREAD-FORMING CONNECTING ELEMENT
ELEMENT DE LIAISON AUTO-FOREUR ET TARAUDEUR

(30) Priorität: 08.04.1999 DE 29906274 U
(43) Veröffentlichungstag der Anmeldung: 02.01.2002
(73) Patentinhaber: A-Z Ausrüstung und Zubehör GmbH & Co. KG, 45525 Hattingen (DE)
(72) Erfinder: DICKE, Robert, D-58256 Ennepetal (DE)
(74) Vertreter: Zapf, Christoph, Dipl.-Ing.
(86) Internationale Anmeldenummer: EP0002269
(87) Internationale Veröffentlichungsnummer: WO00061958

(56) Entgegenhaltungen:
- DE-U- 29 711 128
- GB-A- 1 315 172
- GB-A- 1 316 157
- US-A- 4 016 795
- US-A- 4 222 689

## Beschreibung

Die vorliegende Erfindung betrifft ein selbstbohrendes und gewindeformendes Verbindungselement, insbesondere Schraube, mit einem Gewindeschaft, der aus einem zylindrischen Kern und einem als Erhebung auf dem Kern gebildeten Gewinde besteht, und mit einer endseitigen Schneidkanten aufweisenden Bohrspitze zum Bohren eines Kernloches für das Gewinde, wobei die Bohrspitze einen Kernloch-Bohrungsdurchmesser definiert, der größer als der Durchmesser des zylindrischen Kerns des Gewindeschaftes und wobei sich an die Bohrspitze ein gewindefreier Abschnitt des zylindrischen Kerns anschließt, wobei der Durchmesser des zylindrischen Kerns kleiner ist als der von einer äußeren Gewindekante des Gewindeschaftes definierte Gewindedurchmesser.

Weiterhin betrifft die Erfindung ein selbstbohrendes und gewindeformendes Verbindungselement, insbesondere Schraube, mit einem Gewindeschaft, der aus einem zylindrischen Kern und einem als Erhebung auf dem Kern gebildeten Gewinde besteht, und mit einer endseitigen Schneidkanten aufweisenden Bohrspitze zum Bohren eines Kernloches für das Gewinde, der größer ist, als der Durchmesser des zylindrischen Kerns des Gewindeschaftes und wobei die Bohrspitze eine sich etwa konisch verjüngende und in den Kern des Gewindeschaftes übergehende Schrägfläche aufweist.

Es sind Verbindungselemente bekannt, die in relativ harte Materialien, wie beispielsweise Hartfaserwerkstoffe, aber auch Metalle (Bleche), unter selbsttätiger Gewindeformung eingeschraubt werden können. Es seien hier beispielsweise Blechschrauben genannt. Vor dem Einschrauben muß dafür allerdings in einem separaten Arbeitsgang ein Kernloch vorgebohrt werden, wobei der Durchmesser des Kemloches in Anpassung an die Ausbildung des Gewindes auf dem Gewindeschaft entsprechend kleiner dimensioniert ist, damit in dem Kernloch selbsttätig ein Gewinde geformt werden kann.

Aus dem DE-GM 297 11 128 ist ein weiteres Verbindungselement bekannt. Um das umständliche und zeitaufwendige Vorbohren eines Kernloches zu vermeiden, weist das gattungsgemäße Verbindungselement eine endseitige Bohrspitze auf, so daß unmittelbar beim Einschraubvorgang im endseitigen Bereich der Bohrspitze spanend ein Kemloch mit einem dem Kern des Gewindeschaftes entsprechenden Durchmesser in das jeweilige Material gebohrt wird. In dieses Kemloch wird nachfolgend der sich an die Bohrspitze anschließende Gewindeschaft nach Art einer Blechschraube eingeschraubt. Dabei formt sich selbsttätig das entsprechende Innengewinde. Das bekannte Verbindungselement hat sich im praktischen Einsatz bereits recht gut bewährt. Es ist vor allem für Hartfaserwerkstoffe konzipiert. Dabei hat sich allerdings in der Praxis ein Problem gezeigt, und zwar speziell bei sogenannten MDF-Platten (MDF = mitteldichte Faserplatte), und zwar wenn die Schraube stimseitig, also von der Schnittkante her, in die Platte eingeschraubt werden soll. Dies ist beispielsweise zum Befestigen von Beschlägen, Eckverschraubungen usw. der Fall. Bei diesem Anwendungsfall kommt es beim Einschrauben der jeweiligen Schraube häufig zu einem Aufplatzen bzw. Aufsprengen der Faserplatte, was dann die Befestigungsfunktion in Frage stellt.

Weiterhin ist aus der GB 1315172 ein selbstbohrendes Verbindungselement bekannt, das mit einer Bohrspitze versehen ist, die einen Kernloch-Bohrungsdurchmesser definiert, der größer ist, als der Durchmesser des zylindrischen Kerns des Gewindeschaftes ist. Weiterhin ist dieses Verbindugnselement mit einer Spannnut und einem gewindefreiem Abschnitt vor der Bohrspitze versehen.

Schließlich ist noch aus der US 4222689 ein gewindeschneidendes Verbindungselement bekannt, bei dem ebenfalls eine Kernloch-Bohrungsdurchmesser definierende Bohrspitze vorhanden ist. Die Bohrspitze dieses Verbindungselementes weist eine sich etwa konisch verjüngende und in den Kern des Gewindeschaftes übergehende Schrägfläche auf, wobei sich das Gewinde genau bis zur Schrägfläche erstreckt.

Auch diese Befestigungselemente sind nur bedingt für eine stimseitige Verschraubung bei MDF-Platten einsetzbar.

Der vorliegenden Erfindung liegt deshalb die Aufgabe zugrunde, ein Verbindungselement der gattungsgemäßen Art zu schaffen, welches sich problemlos auch für diesen speziellen Anwendungsfall eignet, also insbesondere für stimseitige Verschraubungen in MDF-Platten.

Eine erfindungsgemäße Lösung besteht darin, dass der von den Schneidkanten der Bohrspitze eingeschlossene Schneidwinkel kleiner 90°, insbesondere 40 ° bis 60 °, ist.

Eine zweite erfindungsgemäße Lösung besteht darin, dass die Bohrspitze eine relativ kurze Länge aufweist, die maximal etwa gleich dem Kemdurchmesser ist und dass das Gewinde auch über dem Bereich der Bohrspitze verläuft, und zwar mit derart abnehmendem Gewindedurchmesser und mit derart abnehmendem Gewindequerschnitt, dass das Gewinde zum freien Ende der Bohrspitze auf der konischen Schrägfläche vor den Scheidkanten ausläuft.

Durch diese erfindungsgemäße Maßnahmen wird beim Einbohren und Einschrauben der Schraube innerhalb des Materials direkt hinter der Bohrspitze ein im Querschnitt ringförmiger Freiraum gebildet, der zur Aufnahme von beim Bohrvorgang entstehendem Bohrmehl dient. Damit liegt der Erfindung die Erkenntnis zugrunde, daß bei Verwendung der bekannten Verbindungselemente das entstehende Bohrmehl sich sehr schnell aufstaut und einen Druckanstieg bewirkt, der dann Ursache für das Aufplatzen des Materials ist. Durch die Erfindung kann sich das entstehende Bohrmehl derart in dem Freiraum hinter der Bohrspitze verteilen, daß es dort beim weiteren Einschrauben im wesentlichen druckfrei zwischen den Gewindegängen verbleibt. Indem der Bohrdurchmesser kleiner als der äußere Gewindedurchmesser ist, wird ein sicherer Halt des Verbindungselementes in dem jeweiligen Werkstoff gewährleistet.

Gemäß der ersten erfindungsgemäßen Maßnahme weist das Verbindungselement eine verhältnismäßig lange Bohrspitze auf, deren Schneidwinkel kleiner als 90°, insbesondere 40° bis 60°, ist. Im Gegensatz zu einer Schraube mit durchgehenden Gewinden schließt sich an die Bohrspitze ein gewindefreier Abschnitt an. Diese Maßnahme bewirkt, das insbesondere bei dünnen Platten von ca. 12 - 15mm bei einer stimseitigen Verschraubung und bei einer Randverschraubung die Bohrlochwand nicht aufbrechen oder sich aufwerfen kann, da das auftretende Bohrmehl wirkungsvoll abgeführt wird.

Gemäß der zweiten erfindungsgemäßen Maßnahme weist die Bohrspitze eine relativ kurze Länge auf, die maximal etwa gleich dem Kemdurchmesser ist. Über diesen kurzen Weg hinweg kann das Bohrmehl sehr schnell und nahezu ungehindert in den Freiraum im Bereich des Gewindeschaftes zwischen den Gewindegängen und dem Kemloch gelangen. Durch den abnehmenden Gewindedurchmesser bzw. Gewindequerschnitt, der auf der konischen Schrägfläche ausläuft, wird ein frühes Greifen des Gewindes und eine verbesserte Schraubenführung erreicht. Durch diese erfindungsgemäße Ausgestaltung, d. h. durch die Länge LB oder besser gesagt die "Kürze" der Bohrspitze in Verbindung mit der konischen Schrägfläche sowie dem über diesen Bereich hinweg mit abnehmendem Durchmesser und auch mit abnehmendem Querschnitt verlaufenden Gewinde wird erreicht, daß das beim Bohrvorgang entstehende Bohrmehl bzw. die entstehenden Materialpartikel, eventuell auch kleine Späne, gut aus dem Bohrbereich nach hinten weg gelangen kann, so daß ein Anstauen und ein daraus resultierendes, druckbedingtes Aufsprengen des Materials vermieden wird.

Dabei weist die Bohrspitze bevorzugt zwei diametral gegenüberliegende, von einer Anbohrspitze ausgehende und einen Schneidwinkel definierende Schneidkanten auf, wobei jeder Schneidkante in Einschraubdrehrichtung gesehen eine sich etwa axial in Richtung des Gewindeschaftes erstreckende Spannut vorgeordnet ist. Diese Spannuten bilden Passagen, über die das Bohrmehl vom Bohrbereich nach hinten in den Freiraum gelangen kann.

Es ist besonders zweckmäßig, wenn der Bohrdurchmesser etwa 20 bis 30 % größer als der Kemdurchmesser und etwa 20 bis 25 % kleiner als der Gewindedurchmesser ist.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung genauer erläutert werden. Dabei zeigen:
- Fig. 1: eine stark vergrößerte Seitenansicht eines erfindungsgemäßen, hier beispielhaft als Senkkopfschraube ausgebildeten Verbindungselementes und
- Fig. 2: eine stark vergrößerte Seitenansicht eines zweiten erfindungsgemäßen, hier beispielhaft als Senkkopfschraube ausgebildeten Verbindungselementes und
- Fig. 3: eine Draufsicht aus der in Fig. 2 eingezeichneten Richtung A auf eine prismatische Bohrspitze, die aus zwei drehsymetrischen schiefen Pyramiden mit dreieckiger Grundfläche gebildet ist, und
- Fig. 4: eine Draufsicht aus der in Fig. 2 eingezeichneten Richtung A auf eine kegelförmig ausgeformte, zwei Schneidkanten aufweisende Bohrspitze, und
- Fig. 5: eine Draufsicht aus der in Fig. 2 eingezeichneten Richtung A auf eine Bohrspitze, die aus zwei radial zueinander versetzten, sich verjüngenden Kreissegmenten gebildet wird.
- Fig. 6: eine vergrößerte Teilansicht des Bereichs II in Fig. 1.

In den verschiedenen Figuren der Zeichnung sind gleiche Teile stets mit den gleichen Bezugszeichen versehen.

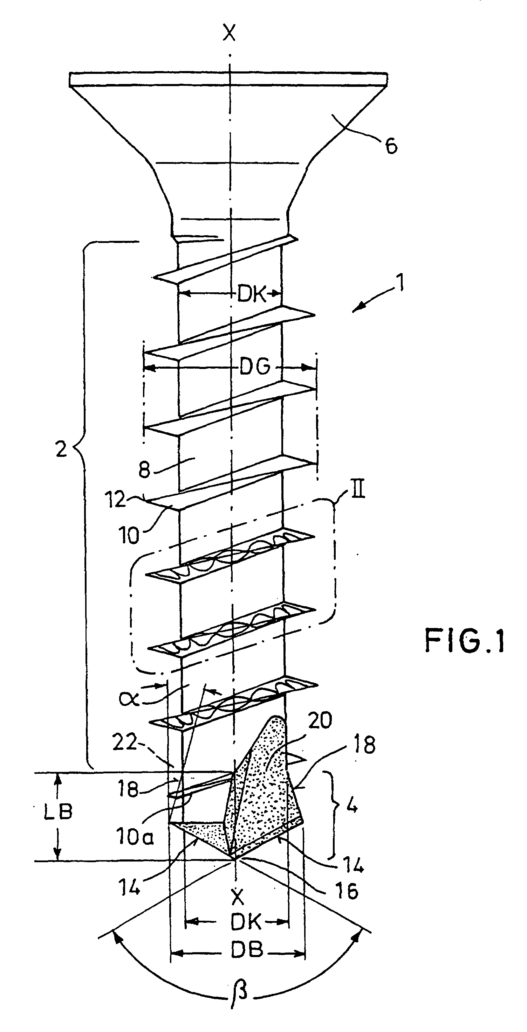

In Fig. 1 ist als erfindungsgemäßes Verbindungselement beispielhaft eine Schraube 1 veranschaulicht, die einen Gewindeschaft 2 und eine endseitige Bohrspitze 4 aufweist. Die Schraube 1 besitzt zudem anderendig einen Schraubenkopf 6, der im dargestellten Beispiel als Senkkopf ausgebildet und mit einem in der Zeichnung nicht erkennbaren Innenkraftangriff für einen Schraubendreher versehen ist (Schlitz, Kreuzschlitz, Innensechskant oder dergleichen). Allerdings kann das Verbindungselement grundsätzlich auch ohne Kopf als Gewindebolzen oder dergleichen ausgebildet sein.

Der Gewindeschaft 2 besteht aus einem im wesentlichen zylindrischen, d. h. im Querschnitt kreisförmigen Kern 8 und einem als Erhebung schraubenlinienförmig über den Kern 8 verlaufenden Gewinde 10. Im dargestellten Beispiel handelt es sich um ein eingängiges Gewinde 10 mit einem etwa V-förmigen Querschnitt und einer äußeren, relativ scharfen Gewindekante 12.

Die Bohrspitze 4 definiert einen Kernloch-Bohrdurchmesser DB, der größer als der Durchmesser DK des zylindrischen Kerns 8 des Gewindeschaftes 2 ist. Femer ist der Bohrdurchmesser DB auch kleiner als ein von der äußeren Gewindekante 12 definierter Gewindedurchmesser DG. Zweckmäßigerweise ist der Bohrdurchmesser DB etwa 20 bis 30 % größer als der Kemdurchmesser DK und etwa 20 bis 25 % kleiner als der Gewindedurchmesser DG. Dies führt bei einer realisierten Ausführungform beispielsweise zu folgenden konkreten Maßen: Bei einem Gewindedurchmesser DG von 4 mm beträgt der Kemdurchmesser DK üblicherweise etwa 2,4 bis 2,5 mm. In diesem Fall sollte der Bohrdurchmesser DB vorzugsweise etwa 3,1 mm betragen.

Die Bohrspitze 4 weist mindestens eine den Bohrdurchmesser DB definierende Schneidkante 14 auf. Im dargestellten Beispiel besitzt die Bohrspitze 4 allerdings nach Art eines Spiralbohrers zwei diametral gegenüberliegende, von einer Anbohrspitze 16 ausgehende und einen Schneidwinkel β definierende Schneidkanten 14. Die Schneidkanten 14 verlaufen, ausgehend von der Anbohrspitze 16, in Längsrichtung der Schraube 1 auf Mantellinien der Bohrspitze 4, so dass die Projektionen der Schneidkanten 14 auf eine Längsachse X-X der Schraube 1 fallen. Die der Anbohrspitze 16 gegenüberliegenden Enden der Schneidkanten 14 definieren den Bohrdurchmesser DB. Ausgehend Enden der Schneidkanten 14 weist die Bohrspitze 4 eine sich etwa konisch verjüngende und in den Kern 8 des Gewindeschaftes 2 übergehende Schrägfläche 18 auf. Die Bohrspitze 4 beginnt somit am Übergangspunkt zwischen dem zylindrischen Kern 8 und der konisch Schrägfläche 18 und endet an der Anbohrspitze 16. Die Länge LB der Bohrspitze 4 ist dementsprechend in Fig. 1 eingezeichnet. Diese Länge LB der Bohrspitze 4 ist erfindungsgemäß relativ kurz gehalten, sie entspricht maximal etwa dem Kerndurchmesser DK, d. h. es gilt: LB ≤ DK. Dabei verläuft das Gewinde 10 vorteilhafterweise auch über den Bereich der konischen Schrägfläche 18 der Bohrspitze 4, und zwar insbesondere mit derart abnehmendem Gewindedurchmesser und vorzugsweise auch mit abnehmendem Gewindequerschnitt, daß das Gewinde 10 zum freien Ende der Bohrspitze 4 hin auf der konischen Schrägfläche 18 schon etwas vor den Schneidkanten 14 ausläuft. Dies ist in Fig. 1 gut zu erkennen, denn der Gewindegang 10a ist deutlich kleiner als das übrige Gewinde 10 im Bereich des Schraubenschaftes 2. Weiterhin ist vorgesehen, daß jeder Schneidkante 14 in Einschraubdrehrichtung gesehen eine sich etwa axial in Richtung des Gewindeschaftes 2 erstreckende Spannut 20 vorgeordnet ist. Jede Spannut 20 unterbricht den Verlauf des Gewindes 10 bzw. 10a und läuft vorzugsweise im Anfangsbereich des Kerns 8 aus.

Durch diese beschriebene, bevorzugte Ausgestaltung, d. h. durch die Länge LB oder besser gesagt, die "Kürze" der Bohrspitze 4 in Verbindung mit der konischen Schrägfläche 18, den Spannnuten 20 sowie dem über diesen Bereich hinweg mit abnehmendem Durchmesser und vorzugsweise auch mit abnehmendem Querschnitt verlaufenden Gewinde 10 bzw. 10 a, wird vorteilhafterweise erreicht, dass das beim Bohrvorgang entstehende Bohrmehl bzw. die entstehenden Materialpartikel, eventuell auch kleine Späne, gut aus dem Bohrbereich nach hinten weg gelangen kann, so dass ein Anstauen und ein daraus resultierendes, druckbedingtes Aufsprengen des Materials vermieden wird.

Das Bohrmehl gelangt über die Spannuten 20 nahezu ungehindert in einen erfindungsgemäß hinter der Bohrspitze 4 gebildeten, im Querschnitt ringförmigen Freiraum 22, wobei der Transport dieses Bohrmehls noch durch eine Art "Spindelfunktion" des im Querschnitt abnehmenden Gewindeganges 10a unterstützt wird.

Im dargestellten Ausführungsbeispiel entspricht die Länge LB der Bohrspitze 4 maximal etwa einem vollständigen Gewindegang, d. h. der Gewindesteigung. Die konische Schrägfläche 18 schließt mit der Längsachse X-X des Verbindungselementes einen Winkel α ein, der etwa im Bereich von 5° bis 20° liegen sollte. Der Schneidwinkel β beträgt etwa 90° bis 130°.

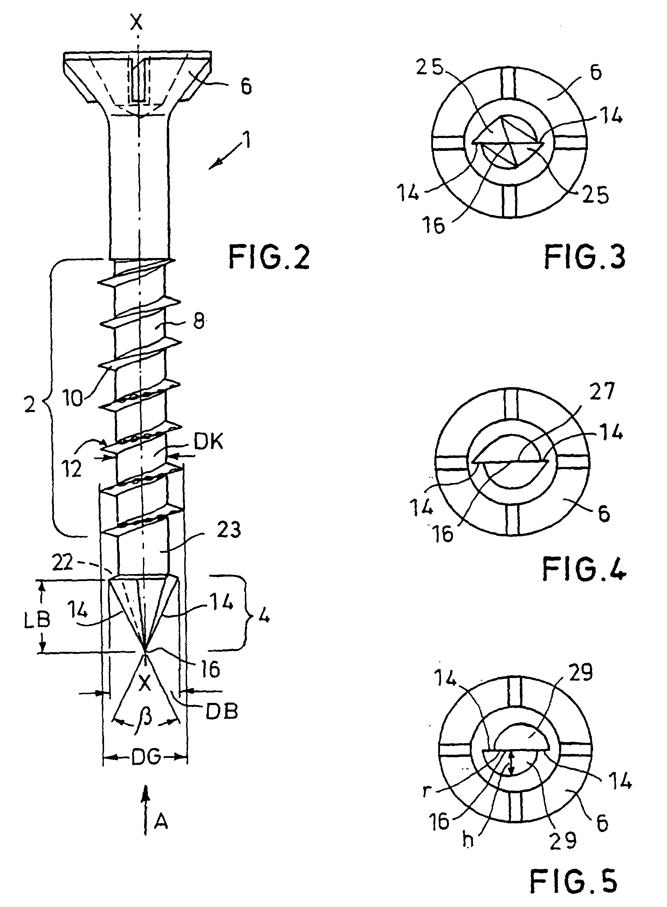

Fig. 2 zeigt eine zweite erfindungsgemäße Schraube 1, insbesondere Senkkopfschraube, jedoch mit einer gegenüber der in Fig. 1 dargestellten Schraube 1 andersartig ausgeführten Bohrspitze 4 und einem daran anschließenden gewindefreien Abschnitt 23 des zylindrischen Kerns 8. Der gewindefreie Abschnitt 23 weist eine Länge auf, die etwa 80 bis 150 %, vorzugsweise 100 %, des Durchmessers DK des zylindrischen Kerns 8 beträgt. Der Schneidwinkel β ist kleiner als 90°, insbesondere 40° bis 60°. Dieser kleine Schneidwinkel β ist erfindungsgemäß für eine axiale Ableitung des entstehenden Bohrmehls vorgesehen. Durch den gewindefreien Abschnitt 23 wird erreicht, dass der Bohrlochrand beim Einschrauben der Schraube 1 nicht ausbricht, da das den Vorschub bewirkende Gewinde 10 erst eingreift, wenn die Bohrspitze 4 bereits tiefer in das Bohrloch eingedrungen ist, so dass kein nachteiliger Zwangsvorschub der Schraube durch die Gewindesteigung zu Beginn des Einschraubvorgangs erfolgt. Zudem bewirkt der kleine Schneidwinkel β, dass beim Einschrauben eine günstigere Kraftverteilung auftritt, so dass die auf den Bohrlochrand einwirkenden Kräfte der erfindungsgemäßen Schraube 1 geringer als bei großen Schneidwinkeln β sind.

Fig. 3 zeigt eine vorteilhafte prismatische Ausgestaltung der Bohrspitze 4. Die Bohrspitze 4 wird aus zwei schiefen Pyramiden 25 mit dreieckiger Grundfläche gebildet, deren Pyramidenspitzen gemeinsam die Anbohrspitze 16 bilden. Die beiden Pyramiden 25 sind über eine ihrer Seitenflächen miteinander verbunden und vorzugsweise drehsymetrisch um die durch die gemeinsame Anbohrspitze 16 verlaufende Längsachse X-X der Schraube 1 angeordnet. Die beiden Pyramiden 25 sind derart senkrecht zur Längsachse X-X der Schraube 1 versetzt zueinander angeordnet, dass ein gegenüber der jeweils anderen Pyramide 25 gebildeter überstehender Bereich der Pyramiden 25 eine Schneidkante 14 bildet. Die Schneidkanten 14 verlaufen, ausgehend von der Anbohrspitze 16, in Längsrichtung der Schraube 1 auf Mantellinien der Bohrspitze 4, so dass die Projektionen der Schneidkanten 14 auf die Längsachse X-X der Schraube 1 fallen. Die der Anbohrspitze 16 gegenüberliegenden Enden der Schneidkanten 14 definieren den Bohrdurchmesser DB.

Fig. 4 zeigt eine weitere vorteilhafte Bohrspitze 4, die aus einem Kegelkörper 27 mit kreisförmiger Grundfläche gebildet ist. Aus dem Kegelkörper 27 sind zwei diametral gegenüberliegende Bereiche im Querschnitt tangential aus dem Kegelmantel 27 herausgeführt, wodurch sich überstehende Bereiche ergeben, die wiederum die Schneidkanten 14 bilden. Die Schneidkanten 14 verlaufen ebenfalls auf Mantellinien der Bohrspitze 4, wobei deren Projektion auf die Längsachse X-X der Schraube 1 fällt und deren der Anbohrspitze 16 gegenüberliegenden Enden den Bohrdurchmesser DB definieren.

Fig. 5 zeigt eine Bohrspitze 4, deren Grundfläche aus zwei Kreissegmenten 29 gebildet ist, deren Bogenhöhe h geringer als ihr Kreisradius r ist. Auch diese erfindungsgemäße Bohrspitze 4 weist zwei diametral gegenüberliegende Schneidkanten 14 auf, die sich aus einem radialen Versatz der beiden Kreissegmente 29 zueinander ergeben und deren Verlauf dem Verlauf der in Fig. 4 beschriebenen Schneidkanten 14 entspricht Die der Anbohrspitze 16 gegenüberliegenden Enden der Schneidkanten 14 definieren auch bei dieser erfindungsgemäßen Ausführungsform den Bohrdurchmesser DB.

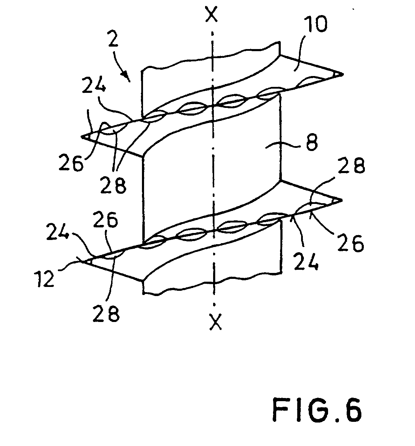

Wie sich am besten aus der vergrößerten Darstellung in Fig. 6 ergibt, ist bei beiden bevorzugten Ausführungsformen vorgesehen, daß das Gewinde 10 über einen sich an die Bohrspitze 4 bzw. den gewindefreien Abschnitt anschließenden Gewindebereich von ein bis fünf, insbesondere wie dargestellt etwa drei bzw. vier, Gewindegängen hinweg im Bereich seiner radial äußeren Gewindekante 12 derart wellenförmig ausgebildet ist, daß eine Folge von Wellenbergen 24 und Wellentälem 26 vorhanden ist. Dabei sind vorzugsweise im Bereich der Wellentäler 26 im Flankenbereich des Gewindes 10 konkave Vertiefungen 28 gebildet. Durch diese - an sich bekannte - Ausgestaltung wird das Einformen des Gewindes auch bei relativ harten Materialien effektiv verbessert, und es werden hohe Haltekräfte erreicht (geringes Eindrehmoment, hohes Lösemoment).

Aufgrund der erfindungsgemäßen Ausgestaltung und der beschriebenen, bevorzugten Ausgestaltungsmerkmale eignet sich die erfindungsgemäße Schraube 1 vor allem zur Anwendung in relativ harten Materialien, wie insbesondere Hartfaser-Werkstoffen. Dabei kann es sich auch um ein Gemisch aus Beton mit Fasern handeln.

Um auch bei solchen relativ harten Materialien eine ausreichende Bohrwirkung zu erreichen, besteht das erfindungsgemäße Verbindungselement zumindest im Bereich der Bohrspitze 4, vorzugsweise aber auch im Bereich des Gewindeschaftes 2, aus einem gehärteten, hoch aufgekohlten Stahl.

Die Erfindung ist nicht auf die dargestellten und beschriebenen Ausführungsbeispiele beschränkt, sondern umfaßt auch alle im Sinne der Erfindung gleichwirkenden Ausführungen. Femer ist die Erfindung bislang auch noch nicht auf die im Anspruch 1 definierte Merkmalskombination beschränkt, sondem kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Selbstbohrendes und gewindeformendes Verbindungselement, insbesondere Schraube (1), mit einem Gewindeschaft (2), der aus einem zylindrischen Kern (8) und einem als Erhebung auf dem Kern (8) gebildeten Gewinde (10) besteht, und mit einer endseitigen Schneidkanten (14) aufweisenden Bohrspitze (4) zum Bohren eines Kernloches für das Gewinde (10), wobei die Bohrspitze (4) einen Kernloch-Bohrungsdurchmesser (DB) definiert, der größer ist als der Durchmesser (DK) des zylindrischen Kerns (8) des Gewindeschaftes (2) und wobei sich an die Bohrspitze (4) ein gewindefreier Abschnitt (23) des zylindrischen Kerns (8) anschließt , wobei der Durchmesser (DK) des zylindrischen Kerns (8) kleiner ist als der von einer äußeren Gewindekante (12) des Gewindeschaftes (2) definierte Gewindedurchmesser (DG),
**dadurch gekennzeichnet, dass** der von den Schneidkanten (14) der Bohrspitze (4) eingeschlossene Schneidwinkel (β) kleiner 90°, insbesondere 40° bis 60° ist.

2. Verbindungselement nach Anspruch 1,
**dadurch gekennzeichnet,**
**dass** die Bohrspitze (4) zwei diametral gegenüberliegende, von einer Anbohrspitze (16) ausgehende und einen Schneidwinkel (β) definierende Schneidkanten (14) aufweist, die auf Mantellinien der Bohrspitze (4) verlaufen und deren Projektionen auf eine Längachse (X-X) der Schraube (1) fallen.

3. Verbindungselement nach Anspruch 1 oder 2,
**dadurch gekennzeichnet,**
**dass** der gewindefreie Abschnitt (23) eine Länge aufweist, die etwa 80 bis 150 %, vorzugsweise 100 % , des Kerndurchmessers (DK) beträgt.

4. Verbindungselement nach einem der Ansprüche 1-3,
**dadurch gekennzeichnet,**
**dass** die Bohrspitze (4) als prismatische Bohrspitze (4) mit zwei schiefen Pyramiden (25) mit dreieckiger Grundfläche ausgebildet ist, deren Pyramidenspitzen gemeinsam die Anbohrspitze (16) bilden, wobei die beiden schiefen Pyramiden (25) über eine ihrer Seitenflächen miteinander verbunden sind.

5. Verbindungselement nach Anspruch 4,
**dadurch gekennzeichnet,**
**dass** die schiefen Pyramiden (25) drehsymetrisch um die durch die Anbohrspitze (16) verlaufende Längsachse(X-X) der Schraube (1) angeordnet sind.

6. Verbindungselement nach Anspruch 5,
**dadurch gekennzeichnet,**
**dass** die beiden schiefen Pyramiden (25) derart senkrecht zur Längsachses (X-X) der Schraube (1) zueinander versetzt angeordnet sind, dass ein gegenüber der jeweils anderen schiefen Pyramide (25) gebildeter überstehender Bereich der Pyramiden (25) die Schneidkante (14) bildet.

7. Verbindungselement nach einem der Ansprüche 1 bis 3,
**dadurch gekennzeichnet,**
**daß** die Bohrspitze (4) als Kegelkörper (27) mit kreisförmiger Grundfläche ausgebildet ist, wobei aus dem Kegelkörper (27) zwei diametral gegenüberliegende Bereiche im Querschnitt tangential aus dem Kegelmantel (27) herausgeführt sind und die Schneidkanten (14) bilden.

8. Verbindungselement nach einem der Ansprüche 1-3
**dadurch gekennzeichnet,**
**daß** die Grundfläche der Bohrspitze (4) aus zwei senkrecht zur Längsachse (X-X) der Schraube (1) zueinander versetzten Kreissegmenten (29) gebildet ist, wobei jeweils gegenüber dem anderen Kreissegment (29) überstehende Bereiche der beiden Kreissegmente (29) die Schneidkanten (14) bilden.

9. Verbindungselement nach Anspruch 8
**dadurch gekennzeichnet,**
**daß** die Kreissegmente (29) eine Bogenhöhe (h) aufweisen, die gleich oder kleiner als ihr Kreisradius (r) ist.

10. Selbstbohrendes und gewindeformendes Verbindungselement, insbesondere Schraube (1), mit einem Gewindeschaft (2), der aus einem zylindrischen Kem (8) und einem als Erhebung auf dem Kern gebildeten Gewinde (10) besteht, und mit einer endseitigen Scheidkanten (14) aufweisenden Bohrspitze (4) zum Bohren eines Kemloches für das Gewinde (10), der größer ist, als der Durchmesser (DK) des zylindrischen Kerns (8) des Gewindeschaftes (2) und wobei die Bohrspitze (4) eine sich etwa konisch verjüngende und in den Kern (8) des Gewindeschaftes (2) übergehende Schrägfläche (18) aufweist,
**dadurch gekennzeichnet,**
**dass** die Bohrspitze (4) eine relativ kurze Länge (LB) aufweist, die maximal etwa gleich dem Kerndurchmesser (DK) ist und dass das Gewinde (10) auch über den Bereich der Bohrspitze (4) verläuft, und zwar mit derart abnehmendem Gewindedurchmesser, und mit derart abnehmendem Gewindequerschnitt, dass das Gewinde (10) zum freien Ende der Bohrspitze (4) auf der konischen Schrägfläche (18) vor den Schneidkanten (14) ausläuft.

11. Verbindungselement nach einem der vorhergehenden Ansprüche,
**dadurch gekennzeichnet,**
**dass** der Bohrdurchmesser (DB) etwa 20 bis 30 % größer als der Kemdurchmesser (DK) bzw. etwa 20 bis 25 % kleiner als der Gewindedurchmesser (DG) ist.

12. Verbindungselement nach einem der vorhergehenden Ansprüche,
**dadurch gekennzeichnet,**
**dass** Spannnuten (20) sich etwa axial in Richtung des Gewindeschaftes (2) erstrecken.

13. Verbindungselement nach einem vorhergehenden Ansprüche
**dadurch gekennzeichnet,**
**daß** das Gewinde (10) über einen sich an die Bohrspitze (4) anschließenden Gewindebereich von einem bis fünf Gewindegängen hinweg im Bereich seiner radial äußeren Gewindekante (12) derart wellenförmig ausgebildet ist, daß eine Folge von Wellenbergen (24) und Wellentälern (26) vorhanden ist, wobei vorzugsweise im Bereich der Wellentäler (26) im Flankenbereich des Gewindes (10) Vertiefungen (28) gebildet sind.

## Claims

1. Self-drilling and thread-forming connecting element, in particular a screw (1), having a threaded shank (2), which consists of a cylindrical core (8) and a thread (10) formed as a prominence on the core (8), and having a drilling point (4) which has end cutting edges (14) and is intended for drilling a core hole for the thread (10), the drilling point (4) defining a core-hole drilling diameter (DB) which is greater than the diameter (DK) of the cylindrical core (8) of the threaded shank (2), and a thread-free section (23) of the cylindrical core (8) adjoining the drilling point (4), the diameter (DK) of the cylindrical core (8) being smaller than the thread diameter (DG) defined by an outer thread edge (12) of the threaded shank (2), **characterized in that** the cutting angle (β) enclosed by the cutting edges (14) of the drilling point (4) is less than 90°, in particular 40° to 60°.

2. Connecting element according to Claim 1, **characterized in that** the drilling point (4) has two diametrically opposite cutting edges (14) which start from a spotting tip (16), define a cutting angle (β) and run on generating lines of the drilling point (4), and the projections of which fall onto a longitudinal axis (X-X) of the screw (1).

3. Connecting element according to Claim 1 or 2, **characterized in that** the thread-free section (23) has a length which is about 80 to 150%, preferably 100%, of the core diameter (DK).

4. Connecting element according to one of Claims 1 to 3, **characterized in that** the drilling point (4) is designed as a prismatic drilling point (4) having two oblique pyramids (25) with a triangular base area, the pyramid tips of which together form the spotting tip (16), the two oblique pyramids (25) being connected to one another via one of their side surfaces.

5. Connecting element according to Claim 4, **characterized in that** the oblique pyramids (25) are arranged so as to be rotationally symmetrical about the longitudinal axis (X-X), running through the spotting tip (16), of the screw (1).

6. Connecting element according to Claim 5, **characterized in that** the two oblique pyramids (25) are arranged offset from one another perpendicularly to the longitudinal axis (X-X) of the screw (1) in such a way that a projecting region of the pyramids (25), which is formed relative to the other respective oblique pyramid (25), forms the cutting edge (14).

7. Connecting element according to one of Claims 1 to 3, **characterized in that** the drilling point (4) is designed as a conical body (27) with a circular base area, in which case, from the conical body (27), two diametrically opposite regions in cross section are led tangentially out of the lateral surface (27) of the cone and form the cutting edges (14).

8. Connecting element according to one of Claims 1 to 3, **characterized in that** the base area of the drilling point (4) is formed from two circle segments (29) offset from one another perpendicularly to the longitudinal axis (X-X) of the screw (1), regions of the two circle segments (29) which project in each case relative to the other circle segment (29) forming the cutting edges (14).

9. Connecting element according to Claim 8, **characterized in that** the circle segments (29) have an arc height (h) which is equal to or less than their circle radius (r).

10. Self-drilling and thread-forming connecting element, in particular a screw (1), having a threaded shank (2), which consists of a cylindrical core (8) and a thread (10) formed as a prominence on the core, and having a drilling point (4) which has end cutting edges (14) and is intended for drilling a core hole for the thread (10), the drilling point (4) defining a core-hole drilling diameter (DB) which is greater than the diameter (DK) of the cylindrical core (8) of the threaded shank (2), and the drilling point (4) having a roughly conically tapering inclined surface (18) merging into the core (8) of the threaded shank (2), **characterized in that** the drilling point (4) has a relatively short length (LB) which is at most about equal to the core diameter (DK), and **in that** the thread (10) also runs over the region of the drilling point (4), to be precise with such a decreasing thread diameter and with such a decreasing thread cross section that the thread (10) runs out towards the free end of the drilling point (4) on the conical inclined surface (18) before the cutting edges (14).

11. Connecting element according to one of the preceding claims, **characterized in that** the drilling diameter (DB) is about 20 to 30% larger than the core diameter (DK) and/or about 20 to 25% smaller than the thread diameter (DG).

12. Connecting element according to one of the preceding claims, **characterized in that** flutes (20) extend approximately axially in the direction of the threaded shank (2).

13. Connecting element according to one of the preceding claims, **characterized in that** the thread (10), across a thread region adjoining the drilling point (4) of one to five thread turns, is of wavelike design in the region of its radially outer thread edge (12) in such a way that there is a sequence of wave crests (24) and wave troughs (26), recesses (28) preferably being formed in the region of the wave troughs (26) in the flank region of the thread (10).

## Revendications

1. Elément d'assemblage auto-foreur et taraudeur, en particulier vis (1), comprenant une tige de vis (2) qui est composée d'un noyau cylindrique (8) et d'un filetage (10) réalisé sous la forme d'une protubérance sur le noyau (8), et une pointe foreuse (4) présentant des arêtes de coupe terminales (14) destinées à percer un trou de noyau pour le filetage (10), dans lequel la pointe foreuse (4) définit un diamètre de perçage de trou de noyau (DB) qui est plus grand que le diamètre (DK) du noyau cylindrique (8) de la tige filetée (2) et un segment (23) dépourvu de filetage du noyau cylindrique (8) fait suite à la pointe foreuse (4), et dans lequel le diamètre (DK) du noyau cylindrique (8) est plus petit que le diamètre de filetage (DG) défini par une arête de filetage extérieure (12) de la tige filetée (2),
**caractérisé en ce que** l'angle de coupe (β) enfermé par les arêtes de coupe (14) de la pointe foreuse (4) est inférieur à 90 °, et vaut en particulier de 40 ° à 60 °.

2. Elément d'assemblage selon la revendication 1,
**caractérisé en ce que** la pointe foreuse (4) présente deux arêtes de coupe (14) diamétralement opposées, qui partent d'une pointe (16) d'amorçage du forage et définissent un angle de coupe (β), qui s'étendent sur des génératrices de la pointe foreuse (4) et dont les projections tombent sur un axe longitudinal (X-X) de la vis (1).

3. Elément d'assemblage selon la revendication 1 ou 2,
**caractérisé en ce que** le segment (23) dépourvu de filetage présente un longueur qui vaut environ 80 à 150 %, de préférence 100 %, du diamètre du noyau (DK).

4. Elément d'assemblage selon une des revendications 1-3,
**caractérisé en ce que** la pointe foreuse (4) est réalisée sous la forme d'une pointe foreuse prismatique (4) présentant deux pyramides obliques (25) à surface de base triangulaire, dont les pointes de pyramide forment ensemble la pointe (16) d'amorçage du forage, les deux pyramides obliques (25) étant assemblées l'une à l'autre par une de leurs surfaces latérales.

5. Elément d'assemblage selon la revendication 4,
**caractérisé en ce que** les pyramides obliques (25) sont disposées avec une symétrie de révolution autour de l'axe longitudinal (X-X) de la vis (1) qui passe par la pointe (16) d'amorçage du forage.

6. Elément d'assemblage selon la revendication 5,
**caractérisé en ce que** les deux pyramides obliques (25) sont disposées décalées l'une par rapport à l'autre perpendiculairement à l'axe longitudinal (X-X) de la vis (1) d'une manière telle qu'une région de chacune des pyramides (25) qui est formée débordante par rapport à l'autre pyramide oblique (25) forme l'arête de coupe (14).

7. Elément d'assemblage selon une des revendications 1 à 3,
**caractérisé en ce que** la pointe foreuse (4) est réalisée sous la forme d'un corps conique (27) à surface de base circulaire et, en partant du corps conique (27), deux régions diamétralement opposées sont en saillie, tangentiellement en section transversale, par rapport à la surface latérale de cône (27) et forment les arêtes de coupe (14).

8. Elément d'assemblage selon une des revendications 1-3,
**caractérisé en ce que** la surface de base de la pointe foreuse (4) est formée de deux segments de cercle (29) décalés l'un par rapport à l'autre perpendiculairement à l'axe longitudinal (X-X) de la vis (1), et des régions des deux segments de cercle (29) dont chacune déborde au-delà de l'autre segment de cercle respectif (29) forment les arêtes de coupe (14).

9. Elément d'assemblage selon la revendication 8,
**caractérisé en ce que** les segments de cercle (29) présentent une flèche d'arc (h) qui est égale ou inférieure à leur rayon de cercle (r).

10. Elément d'assemblage auto-foreur et taraudeur, en particulier vis (1) comprenant une tige de vis (2) qui est composée d'un noyau cylindrique (8) et d'un filetage (10) réalisé sous la forme d'une protubérance sur le noyau (8), et une pointe foreuse (4) présentant des arêtes de coupe terminales (14) destinées à percer un trou de noyau pour le filetage (10) qui est plus grand que le diamètre (DK) du noyau cylindrique (8) de la tige filetée (2), et dans lequel la pointe foreuse (4) présente une surface oblique (18) qui se rétrécit à peu près en cône et qui se termine dans le noyau (8) de la tige filetée (2),
**caractérisé en ce que** la pointe foreuse (4) présente une longueur (LB) relativement courte qui est au maximum à peu près égale au diamètre de noyau (DK) et **en ce que** le filetage (10) s'étend aussi sur la région de la pointe foreuse (4), plus précisément avec un diamètre de filetage et une section de filetage qui décroissent de telle manière qu'en se dirigeant vers l'extrémité libre de la pointe foreuse (4), le filetage (10) se termine sur la surface oblique conique (8) avant d'atteindre les arêtes de coupe (14).

11. Elément d'assemblage selon une des revendications précédentes,
**caractérisé en ce que** le diamètre de perçage (DB) est supérieur d'environ 20 à 30 % au diamètre de noyau (DK), respectivement inférieur d'environ 20 à 25 % au diamètre de filetage (DG).

12. Elément d'assemblage selon une des revendications précédentes,
**caractérisé en ce que** des rainures d'évacuation des copeaux (20) s'étendent à peu près axialement selon la direction de la tige filetée (2).

13. Elément d'assemblage selon une des revendications précédentes,
**caractérisé en ce que**, sur une région de filetage de un à cinq filets, qui fait suite à la pointe foreuse (4), le filetage (10) est réalisé avec une forme ondulée dans la région de son arête radialement extérieure (12) de telle manière qu'il se forme une succession de sommets d'onde (24) et de creux d'onde (26), des encoches (28) étant formées dans la région de flanc du filetage (10), de préférence dans la région des creux d'onde (26).
